# EUROPEAN PATENT APPLICATION

(11) **EP 1 783 353 A1**
(43) Date of publication of application: **09.05.2007**
(21) Application number: 05023693.4
(22) Date of filing: 28.10.2005
(51) Int. Cl.: F02M 27/04, F02M 31/00

(54) **Apparatus and method for pretreating of fuel**

(71) Applicant: Tramontana, Michel, 62010 Montefano (MC) (IT); Bevivino, Antonio, 00040 Marino / Roma (IT)
(72) Inventor: Tramontana, Michel, 62010 Montefano (IT)
(74) Representative: Best, Michael

(57) **Abstract**

The invention provides an apparatus and method for pretreating of fuel supplied to a combustion process, comprising an inlet for providing volatilised or gaseous fuel to the apparatus; and an electric charging apparatus (50) comprising a heating chamber for heating the volatilised or gaseous fuel and an electric reaction chamber (51) for electrically charging and/or discharging the volatilised or gaseous fuel. Preferably, the electric reaction chamber is a triboelectric reactor adapted to electrically charge the fuel by a triboelectric process. The triboelectric reactor may essentially be made of ceramics. The triboelectric reactor may comprise at least one fuel conductor having such a small width or diameter that the volatilised or gaseous fuel is charged during its flowing through due to a triboelectric effect.

## Description

### FIELD OF THE INVENTION

The present invention relates generally to the improvement of combustion processes of fuel or other combustible media, and, for example, to an apparatus and a method for pretreating of fuel which is supplied to a combustion process.

### BACKGROUND OF THE INVENTION

Current combustion processes taking place, for example, in combustion engines, furnaces, boilers, turbines, or similar, involve fuels, e.g. gasoline, kerosene, fuel oil, different types of gas, alcohol, etc. Such fuels are composed of hydrocarbon compounds having different structures and sizes. Burning such compounds is a complex oxidation process involving hundreds of elementary reactions during which many intermediate reaction products are created and oxidised. Additionally, combustion processes of fuels also depend on environmental conditions, such as temperature, air (oxygen) supply, humidity, shape of the combustion chamber, distribution of the fuel in the combustion chamber, etc. Thus, it is difficult to burn fuels optimal which leads to inefficient combustion of fuels and exhaust products, for example smut, polycyclic aromatic hydrocarbons, aldehydes, nitrogen oxides, etc. Some of these exhaust products are supposed to be cancer-causing.

US-A-5,794,601 discloses a fuel pretreater apparatus and method for pretreating an alternate fuel by volatilising it in a volatilisation chamber. The volatilised alternate fuel is conducted through a heated reactor including a reactor rod, preferably made of steel. The reactor rod is preferably placed co-axially in the reactor and the volatilised fuel is conducted through a small spacing between the reactor rod and a reactor wall. The reactor as well as the volatilisation chamber is heated by exhaust gas delivered from a combustion engine burning the volatilised alternate fuel.

### SUMMARY OF THE INVENTION

According to a first aspect of the invention, an apparatus for pretreating of fuel supplied to a combustion process is provided, comprising: an inlet for providing volatilised or gaseous fuel to the apparatus, and an electric charging and/or discharging apparatus comprising a heating chamber for heating the volatilised or gaseous fuel and an electric reaction chamber for electrically charging and/or discharging the volatilised or gaseous fuel.

Another aspect of the invention is directed to a method of pretreating of fuel supplied to a combustion process, comprising the steps of: providing volatilised or gaseous fuel; heating the volatilised or gaseous fuel; and electrically charging and/or discharging the heated volatilised or gaseous fuel.

Another aspect of the invention is directed to a triboelectric and/or charging/discharging apparatus for pretreating water, such that is decomposed into its atomic elements H2 and 02 which are separated by a membrane in order to obtain H2 gas.

Further aspects are set forth in the dependent claims, the following description and the drawings. Other features are inherent in the methods and products disclosed or will become apparent to those skilled in the art from the following detailed description of embodiments and its accompanying drawings.

### BRIEF DESCRIPTION OF THE DRAWINGS

Embodiments of the invention will now be described, by way of example, and with reference to the accompanying drawings, in which:
Fig. 1 illustrates a schematic principle of a conventional combustion process;
Fig. 2 is a schematic cross section view of a conventional triboelectric generator;
Fig. 3 is an illustrative view of the triboelectric generator of Fig. 3;
Fig. 4 is a schematic longitudinal section view of a fuel volatilisation chamber according to an embodiment of the invention;
Fig. 4b is a longitudinal section view of another embodiment of a fuel volatilisation chamber;
Fig. 4c is a schematic longitudinal section view of still another embodiment of a fuel volatilisation chamber;
Fig. 5 illustrates schematically a fuel mixing chamber according to an embodiment of the invention;
Fig. 6 shows a schematic longitudinal section view of a triboelectric reactor according to an embodiment of the invention;
Fig. 7 is a schematic cross section view of the triboelectric reactor of Fig. 6;
Fig. 8 shows s an alternative embodiment of a triboelectric reactor;
Fig. 9 shows an embodiment of an inner structure of a triboelectric reaction chamber for enhancing the triboelectric effect;
Fig. 9b shows another embodiment of an inner structure of a triboelectric reaction chamber for enhancing the triboelectric effect;
Fig. 10 shows another alternative embodiment of a triboelectric reactor;
Fig. 10b illustrates an embodiment of a triboelectric reactor having multiple reactor chambers;
Fig. 11 shows an embodiment of an electric charging/discharging apparatus;

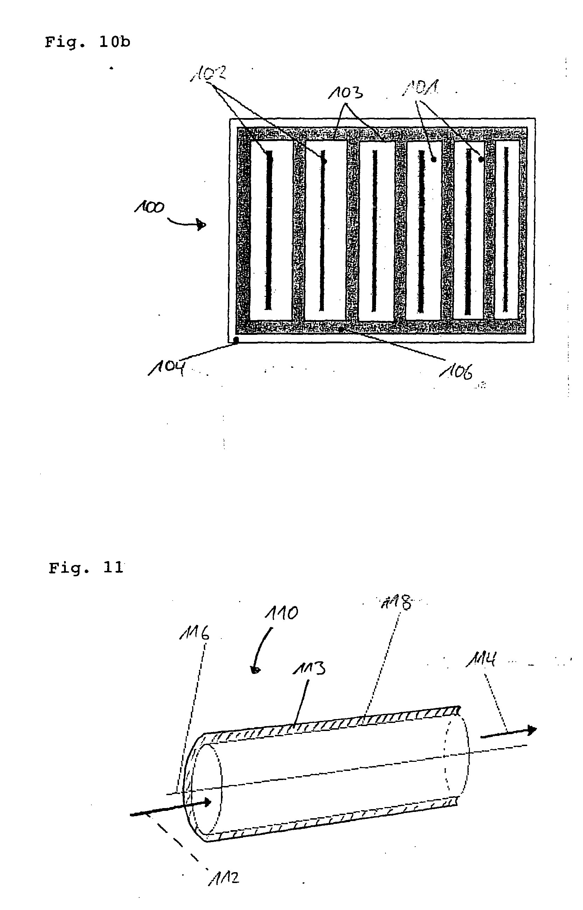

Fig. 11 b shows another embodiment of an electric charging/discharging apparatus;

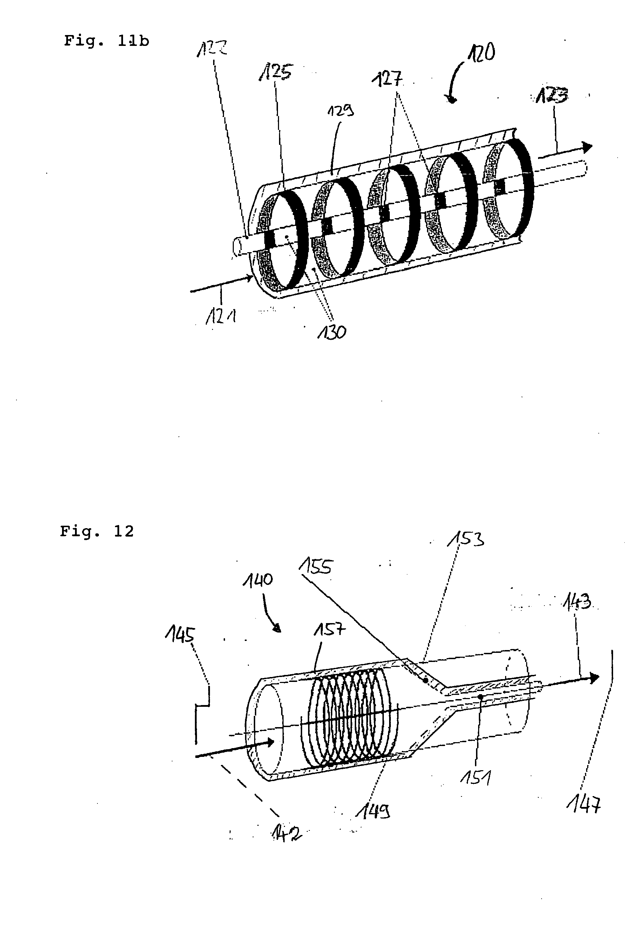

Fig. 12 shows an embodiment of an electric charging/discharging apparatus combined with a triboelectric reactor; and

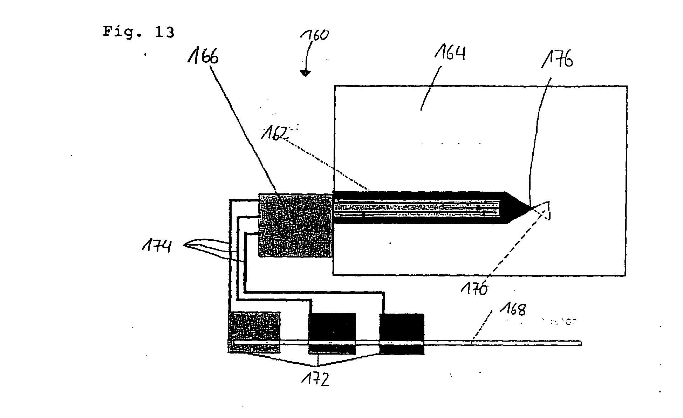

Fig. 13 illustrates an embodiment of a combustion apparatus with integrated triboelectric reactor.

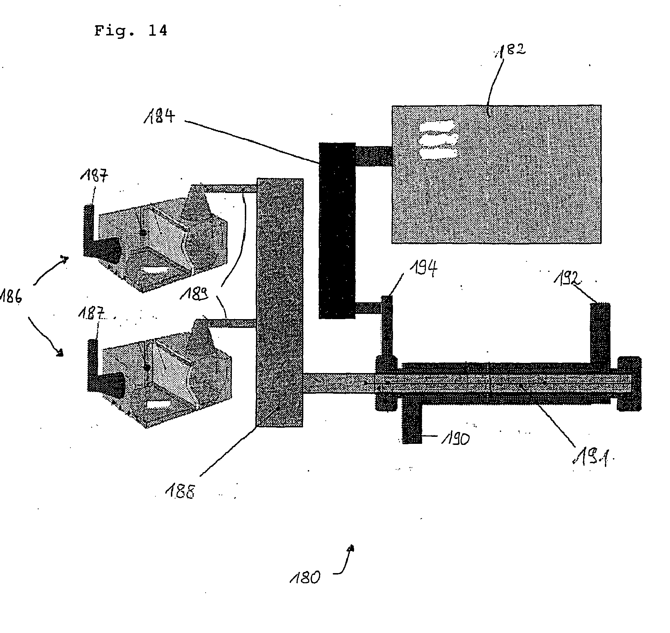

Fig. 14 illustrates another embodiment of a combustion apparatus with integrated triboelectric reactor.

### DESCRIPTION OF THE PREFFERED EMBODIMENTS

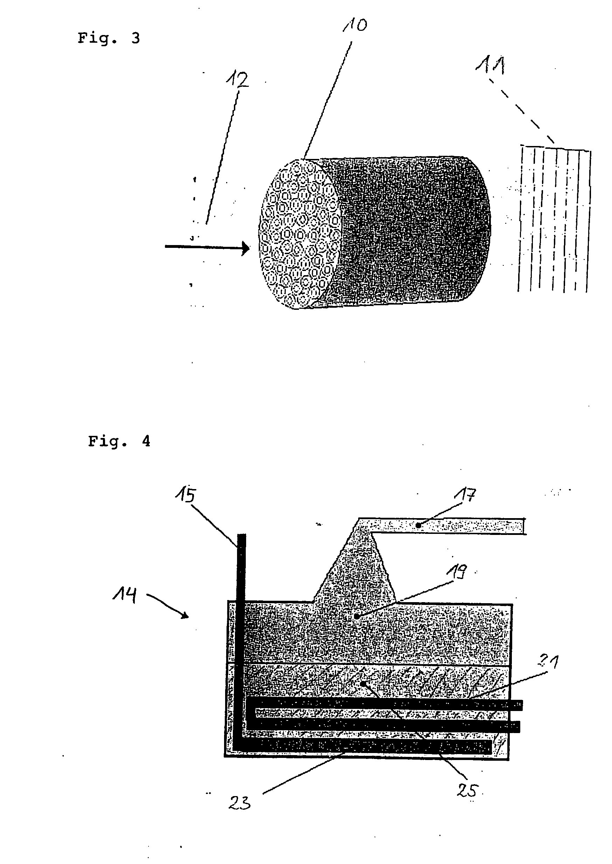

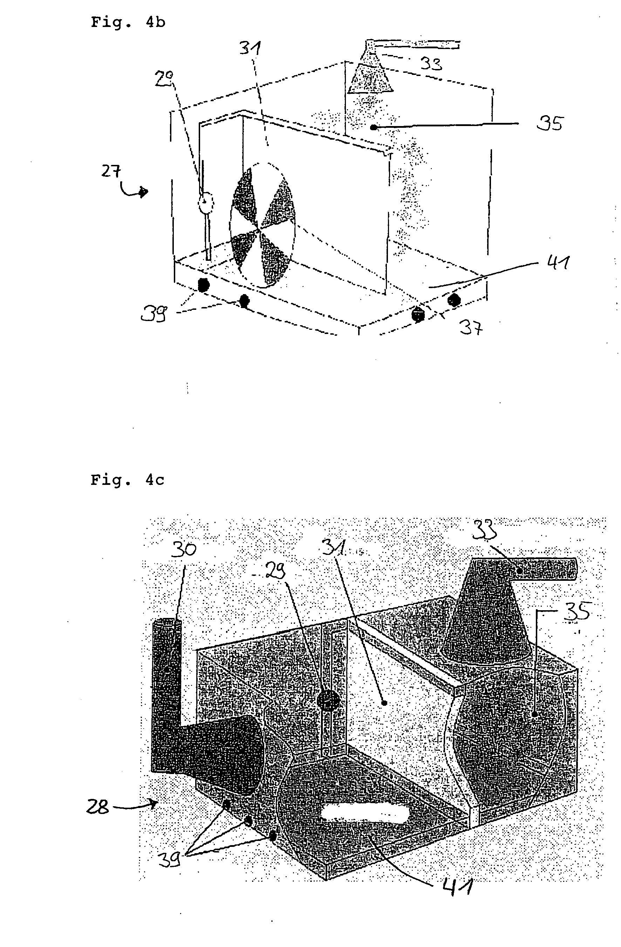

Before proceeding further with the detailed description of the Figs. 4-13, however, a few general items concerning the preferred embodiments of the invention will be discussed.

Combustion engines or other combustion apparatuses, as an example, which burn fuel (wherein the term "fuel" refers to any liquid or gaseous substance, which can be oxidised, e.g. gasoline, kerosene, fuel oil, alcohol), are expected to provide the best possible efficiency, i.e. the highest ratio of received power of the apparatus to used fuel which is achievable. This ratio depends i.a. on the combustion process of the fuel. According to an embodiment, fuel is burned in at least one combustion chamber of a combustion apparatus. In such a combustion chamber the fuel is normally injected via a nozzle distributing the fuel in the combustion chamber. For example, in a gasoline combustion engine fuel is injected in a combustion chamber (cylinder) via such a nozzle. Due to the injection process the fuel is e.g. sprayed and divided into little fuel droplets. Such droplets are big groups of fuel molecules and contain, e.g. billions of molecules and have a size of several microns (10⁻⁶m). According to the inventors, there even exist size relations of oxygen molecules to droplets of 1:10⁵.

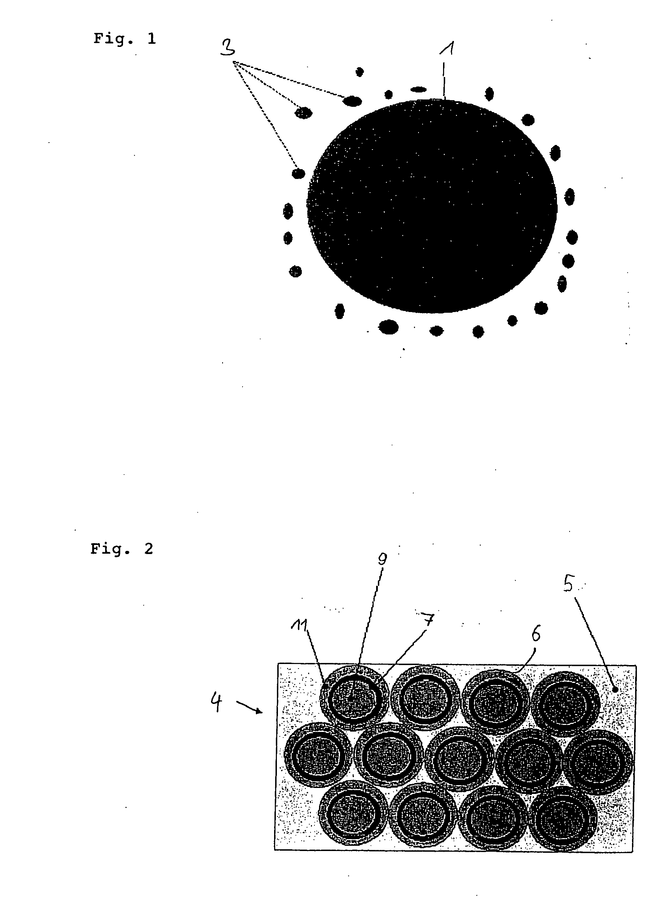

In Fig. 1 such a droplet 1 of fuel molecules is illustrated in a sectional view. This droplet 1 is surrounded by a couple of oxygen molecules 3 having a size in the order of Angstroms (10⁻¹⁰ m). Oxidisation of fuel molecules, in a simplified model, takes place where these fuel molecules meet oxygen molecules. From Fig. 1 can be seen that in a first step oxidisation only on the surface of such a fuel droplet would take place. Thus, it could happen that only a part of the droplet is oxidised in the combustion chamber before it is conducted together with exhaust, produced by oxidisation of fuel molecules, out of the combustion chamber.

Combustion processes as discussed above last only a few milliseconds. For instance, in the embodiments where combustion takes place in a combustion engine, e.g. a four cycle engine, the oxidisation of the fuel is finished in a few milliseconds. The fuel in such combustion engines is mixed with air, e.g. in a special chamber or by injecting the fuel directly into the chamber, to provide a mixture with fuel and oxygen molecules in order to optimise the combustion. The combustion of this mixture can be started in two different ways. One is an ignition by a sparkplug and the other is selfignition by compression of the mixture of fuel and air. By compressing the mixture the mixture is heated up due to the physical law found by Gay-Lussac until the combustion starts. Of course, the combustion of the mixture of fuel and air is not an ad hoc process. The combustion starts in a region of the mixture and the flame distributes from such a region through the mixture. Fuels contain many different hydrocarbon compounds, e.g. gasoline contains more then 200 hydrocarbon compounds. The oxidisation of these many different compounds depends i.a. on the temperature. Thus, beneath the uncompleted combustion due to burning only the surface of fuel droplets, there is an uncompleted oxidisation due to insufficient temperature for some oxidisation reactions. The temperature of the flame which burns through the mixture depends on many parameters, such as: composition of the fuel, ratio of air to fuel, compression of the mixture of air and fuel, cooling of the combustion chamber, shape of the combustion chamber, the method of injection of the fuel into the combustion chamber, and so on.

To burn fuel in an efficient way, there have to be oxidised as many fuel molecules and intermediate reaction products as possible. According to embodiments of the invention, it has been recognised that cracking the droplets at least into smaller groups of fuel molecules can lead to a more efficient combustion of the fuel, because more fuel molecules of the inner part of the droplet can be oxidised. It has to be noted that dividing droplets into two or more parts increases the summarised surface of the divided droplets compared with the surface of the initial droplet dramatically. To crack down the droplets into smaller droplets and even molecules into smaller molecules or atoms it has been recognised, according to the inventors, that this could achieved by using a triboelectric effect or in general by charging/discharging processes applied on the fuel before it is supplied to the combustion process.

The triboelectric effect describes a process for collecting charges by friction, which could lead to high voltages. The triboelectric effect is well known to the skilled person and can be found everywhere in the environment. For instance, if a person having shoes with a rubber sole is walking on a special ground, e.g. carpeted floor made out of synthetic fibre, he collects charges due to the triboelectric effect. If this person then touches a grounded object, this charges discharge and, if the voltage is high enough (typically some 1000 Volts), even a little lightning is visible. This lightning results indirectly from the high field strength which arises between the person and the grounded object. When the distance between the person and the grounded object is short enough and the field strength, i.e. the amount of collected electric charges, high enough, charges begin to drift through the air, because the resistance of the air is overcome in this case. This charge drift causes ionisation of air molecules and, thus, due to the following deionisation emittance of photons.

There exist other so called tribophysical and tribochemical effects, as reported e.g. in J. Phys. D: Appl. Phys. 35 No. 12 (2002) L53 - L56, for example, the tribochemical decomposition of lubricants like a thin perfluoropolyether (PFPE) film coating on magnetic recording disk in HDD. Another effect is the decomposition of n-butane gas molecules at the sliding contact in the condition under which triboemission intensity reached a maximum. In the above cited paper also an explanation for these effects is mentioned, namely the formation of a microplasma. In an experiment, wherein the triboelectric effect was studied with a sliding contact, having an elliptical shape with a horseshoe pattern and with a size beyond a hundred micrometers, a microplasma in a microscopic gap around the sliding contact was observed. More accurately, they observed photons fulfilling a prediction, made by an author of the paper, for having a microplasma. Plasma is defined in this reference as a state where the same numbers of free negatively and positively charged particles coexist to give a neutral state. The microplasma itself is produced in the ambient air surrounding the microscopic gap by a discharging process.

The triboelectric effect occurs also for gaseous states, discovered by William Armstrong in 1840 in England. He developed an apparatus using water steam in order to achieve the triboelectric effect (An apparatus using this effect will be called "triboelectric reactor" in the following.). Water droplets in the steam are electrically charged by friction while they pass through narrow channels. The water steam is produced in a boiler standing on four glass legs in order to insulate it. The boiler is heated and the produced water vapour is conducted through a faucet 4 with cylindrical tubes 6 inside, as depicted in Fig. 2. In the inner of tube 6 an iron rod 9 is positioned, having a small distance to the inner side of the tubes 6. The water steam is conducted under high pressure through the resulting narrow spacing 7 between iron rod 9 and the inner side of tube 6. The tubes 6 are surrounded by cooling water 5. Due to friction and the insulation of the boiler, the water steam gives negative charges to the boiler, and the boiler therefore becomes negatively charged, while the water steam becomes positively charged. In the end of the tube 6 the water steam begins to condense and builds tiny water droplets. These droplets carry positive charge, when leaving the tube 6.

Such charges carried by the charged water steam have been used for experiments by collecting them with a charge collector 11, as illustrated in Fig. 3. Here, also the triboelectric reactor 10 comprising multiple tubes 6 is depicted. The water steam 12 is conducted in the left side of the reactor 11, and on the right side charged water steam comes out of the reactor.

In some embodiments of the present invention an electric charging apparatus, e.g. a triboelectric reactor, is used for charging volatilised or gaseous fuel before the fuel is burned in a combustion apparatus. Thus, for example, liquid fuel is transformed into gaseous state which happens in some embodiments in a volatilisation chamber, while gaseous fuel can directly conducted into an electric charging apparatus. The volatilisation of liquid fuel is done in some embodiments with a volatilisation chamber. In some embodiments the liquid fuel is in a lower section of the volatilisation chamber. This liquid fuel is heated by a heating apparatus, e.g. a heating coil conducting controllable heated water and being positioned in the lower section in the volatilisation chamber in the liquid fuel. The temperature of the fuel must be not too high, to prevent the fuel from evaporating and being separated into lighter and heavier components. On the other hand, the temperature should be not too low. More specific, every fuel type has its own temperature window for optimum tribo-electric process, which lies in a range between several degrees and several tens of degrees beneath its evaporation temperature. The volatilisation of the fuel is achieved in the embodiments in different manners. One method is leading compressed air in the volatilisation chamber through the heated fuel. In some embodiments this is achieved by an air pressure apparatus including an air compressor and pipes having air outlet holes for conducting the air through the heated fuel. The air carries then fuel molecules in the air. The mixture of air and fuel molecules is conducted through a duct configuration into, e.g. an electric charging/discharging apparatus or a fuel mixture chamber which can mix different types of fuels. In an alternative embodiment the volatilisation of the fuel is achieved via a fabric fuel diffusor which is soaked with fuel. The fabric fuel diffusor is in some embodiments thin and has, e.g. a rectangular shape, e.g. such as cotton or synthetic fiber cloth. A holder holds the fabric fuel diffusor upright to the ground of the volatilisation chamber, such that the liquid fuel is soaked into the fabric fuel diffusor out of the liquid fuel volume. In front of the fabric fuel diffusor is on one side a ventilation blowing air through the fabric fuel diffusor, and therefore the fuel molecules being soaked into the fabric fuel diffusor are volatilising. In another embodiment, for example, compressed air conducted into the volatilisation chamber is used instead of the ventilation apparatus. The volatilised fuel molecules are conducted through a duct configuration, e.g. into a mixing chamber or an electric charging/discharging apparatus. This conduction is achieved due to the pressure existing in the duct configuration. The pressure arise in some embodiments by applying compressed air on the volatilisation chamber, as explained above. In other embodiments, the suction pressure coming from, e.g. a combustion engine, is sufficient to conduct the volatilised fuel through the duct configuration. In still other embodiments, an additional compressor is located in the duct configuration to supply a sufficient pressure for conduction. Of course, in some embodiments a combination of the above-mentioned pressure methods may be realised.

In some preferred embodiments the electric charging apparatus or the electric reaction chamber, respectively, is a triboelectric reactor adapted to electrically charge the fuel by a triboelectric process. The triboelectric reactor may essentially be made out of ceramics and/or metal. The triboelectric reactor may comprise at least one fuel conductor having such a small width or diameter that the volatilised or gaseous fuel is charged during its flowing through due to a triboelectric effect. The triboelectric reactor includes in some embodiments an entrance for volatilised fuel, a following heating chamber, a pre-chamber which acts as a guide to conduct the gaseous or volatilised fuel through a 180 degrees corner, a triboelectric reaction chamber and an exit leading directly into a combustion chamber of a combustion apparatus or in a mixing chamber. The volatilised fuel, as mentioned above, is conducted via the duct configuration from the volatilisation chamber into a heating chamber of the triboelectric reactor. The heating chamber is in some embodiments a longitudinal pipe through which the fuel in gaseous state is conducted and heated. The heating chamber is surrounded by a triboelectric reaction chamber and the volatilised fuel is conducted through the heating chamber pipe into the surrounding triboelectric reaction chamber. The diameter of the triboelectric reaction chamber depends on the diameter of the heating chamber. It is the spacing of a few millimetres between the outer wall of the heating chamber and the inner wall of triboelectric reaction chamber that ensures processes, such as the triboelectric effect. The length of the reaction chamber depends on the fuel type. In some embodiments the reactor has a size not longer than 30 cm. According to the inventor, there is no need of electrical insulation because inside the triboelectric reaction chamber exists a plasma-like state where negative and positive charges coexist or are discharged immediately inside the triboelectric reaction chamber. The discharge process occurs locally in the environment of each molecule, so that there is no big current flow by charge separation. However, at the exit of the triboelectric reaction chamber charge separation may occur by residual ions. Therefore, the pipeline leading from the triboelectric reactor to the combustion chamber should be electrically isolated. According to the inventor, volatilised and decomposed fuel doesn't get ignited even by high voltage and by high temperature/pressure, because gaseous fuel does not ignite even by high temperature, e.g. at 1000 °C. In order to ignite a decomposed gaseous fuel in the combustion chamber one needs either a high intensity current flow, or in case of a Diesel engine, one needs to inject a small amount of liquid fuel into the decomposed gaseous fuel under high pressure/temperature (typically 1200°C and 40 bar). In the reaction chamber, the triboelectric effect occurs by friction of the volatilised fuel and the surface of the triboelectric reaction chamber and therefore the volatilised fuel is electrically charged. The friction between the reaction chamber surface and the volatilised fuel may be increased in some embodiments by a special shape of the reaction chamber surface, such as additional structures in various shapes which increase the surface for friction. Due to reactions taking place in the triboelectric reaction chamber the temperature, in some embodiments, reaches from several 100 degrees Celsius at the entrance of the reactor chamber up to about 2000 degrees Celsius at the highest temperature point on the surface of the triboelectric chamber. This means that inside of the reaction chamber where the reactions take place, the temperature could be even higher. The heat generated by the reactions taking place in the triboelectric reaction chamber heats the heating chamber which is surrounded by the triboelectric reaction chamber. In some embodiments an auxiliary heating apparatus is provided, surrounding the triboelectric reaction chamber. For instance, in some embodiments exhaust (gas) from a combustion chamber is conducted through the auxiliary heating apparatus and heats in this way the triboelectric reaction chamber. Such an auxiliary heating chamber is especially useful in the initial starting phase of the combustion process. In this initial starting phase, depending on the fuel type, the temperature in the triboelectric reaction chamber may not be high enough to start the required reactions for decomposition of the fuel molecules efficiently. In some embodiments the heating chamber located in an interior of the triboelectric reactor is left away. According to the inventors, in some embodiments, in case of some fuel types, e.g. alcohol, the triboelectric reaction can already start at room temperature, however, even in this case the warm-up phase of the process, before reaching the maximum efficiency, would last much longer. In general, the heating of the gaseous fuel before entering the triboelectric reaction chamber and the auxiliary heating of the electrical charging/discharging reactor is required in order to reach the maximum efficiency point in the shortest way. Thus, such a heating chamber is not always necessary in a warm environment, though it is preferable. In a cold environment such as outdoors in winter and for some fuel types, e.g. diesel fuel, such a heating chamber may necessary to start the process.

In some embodiments an electric charging/discharging and decomposition of volatilised fuel is achieved by a corona discharge process. In such embodiments, for example, an electric charging apparatus has at least two electrodes, such as a capacitor, between which volatilised fuel is conducted. For example, in some embodiments one electrode is a cylindrical tube and the other electrode is a wire running along the symmetric middle axis of the cylindrical tube. Applying a high direct or alternate current, e.g. some 100 Volts up to few 10000 Volts, on the electrodes would lead to a high field strength between the two electrodes. Depending on the amount of applied voltage and the volatilised fuel parameters, such as temperature, pressure and density, etc., various effects would arise. For instance, a corona discharge, ionisation of air and fuel molecules located between the two electrodes caused by the electric field and/or by collisions of electrons with molecules and/or atoms, plasma generation or gas discharge may arise. Such effects may lead to decomposition of fuel molecules of the volatilised fuel conducted through the apparatus. Additionally, to enhance the decomposition of fuel molecules and/or fuel droplets the electric charging/discharging apparatus is heated by exhaust coming from a combustion chamber. Such exhaust may be conducted through a chamber surrounding the electric charging/discharging apparatus.

In some embodiments the electric charging/discharging apparatus is adapted to collect a charge in the fuel of about 1000 As. This collected charge, measured at the end of a fuel conductor of the electric charging/discharging apparatus, is in some embodiments even higher. The amount of collected charges depends on various parameters including the kind of fuel, the temperature, the friction of the fuel in a triboelectric reactor, etc. Thus, the collected charge of about 1000 As has to be regarded as minimum value in some embodiments.

The inventors have discovered, that the triboelectric effect or in general electrostatic charging/discharging can be used to decompose fuel droplets or even fuel molecules. In order to dissociate a chemical bonding between atoms, certain amount of energy must be applied. The amount of the energy needed for molecular decomposition depends on the type of bonding, e.g. hydrogen bonding, covalent bonding, etc. The below thermochemical equation shows the needed amount of energy for the decomposition of water:

2H₂O → 2H₂ + O₂ - 571,6 kJ

This reaction has an enthalpy of dH = + 571,6 kJ, while the enthalpy of a hydrogen bonding is about 20 kJ/mol and the Vanderwaals force for weak interactions between molecules is in the range of 0.1 - 5.0 kJ/mol. According to the inventor at a first step an intermolecular bonding, such as hydrogen bonding, is decomposed when the fuel is constantly charged electrically and discharged again, which leads to heat generation, respectively. By increasingly charging the fuel molecules in an electric charging/discharging apparatus the second type of reaction may start. Preferably, a resonant quantum electrodynamic cavity effect (known as "sonoluminescence") of micro-bubbles in water and also in other fuels may arise. The micro-bubbles form resonant cavities that dissociate water and fuel molecules on its surface and emit heat energy of several tens of thousand degrees or more when they collapse. This amount of energy emission is high enough to dissociate the fuel and water molecules in the vicinity of micro-bubbles. Correlation between steam electrification, cavity QED, micro bubbles and dissociation of water molecules is also discussed in "Bubbles and steam electricity" by T.V. Prevenslik, 11 F, Greenburg Court, Discovery Bay, Hong Kong. Thus, by accumulating energy, an intramolecular decomposition is initialised. A possible sequence of the reactions taking place inside an electric charging/discharging apparatus reaction chamber can be schematically outlined as follows:

Heat absorption → electrostatic charging/discharging → heat generation → molecular decomposition A (intermolecular) → heat generation →start building micro-bubbles → electrostatic charging/discharging → heat generation → molecular decomposition B (inter- and intramolecular) → heat generation →

increase of micro-bubbles → electrostatic charging/discharging → heat generation → collapse of micro-bubbles → emission of very high heat energy → molecular decomposition C (intramolecular) → heat generation → etc.

The charging/discharging of the fuel molecules is a continuous process as well as the molecular decomposition, the nucleation and collapse of micro-bubbles and the following heat generation. In the first part of the sequence only intermolecular decomposition (A) of fuel molecules takes place. For instance, in this part of the sequence fuel droplets are decomposed into smaller groups of molecules or into single molecules. In the next sequence, when enough energy by heat generation and electrostatic charging is accumulated molecular decomposition B starts, which involves beneath the intermolecular decomposition also the intramolecular decomposition of fuel molecules. Here, bigger molecules are decomposed into smaller components. In the decomposition process energy is emitted which generates heat. The elements produced by the decomposition of the fuel molecules, namely smaller molecules and atoms, are continuously charged until they reach the exit of the reaction chamber. According to the inventors, parallel to this process micro-bubbles are nucleated to form resonant QED cavities. In the cavities UV frequency arises which happens to be the dissociation frequency of water. This means that in case of water the molecules on the wall of the micro-bubbles already dissociate during the nucleation of micro-bubbles. It is known that a very high temperature, e.g. several tens of thousand degrees Celsius, arises through the collapse of micro-bubbles although there are different theories about the amount of energy emission during the collapse. Thus, according to the inventors, molecules may be decomposed down to atomic level at the end of the reaction chamber of an electric charging/discharging apparatus.

In some embodiments fuel treated in an electric charging/discharging is mixed with water being also treated in an electric charging/discharging apparatus. According to the inventors, energy efficiencies up to 70% or more can be achieved with a Diesel engine (over 100% increase of efficiency) when water is treated and decomposed with the triboelectric reactor together with Diesel fuel. The experimental setup is such that a defined load, such as an electric generator, is attached to an engine and the fuel consumption and output power is measured in a defined time period. Every fuel has its own calorific power, e.g. heptane has 44000 kJ/kg, butane 45600 kJ/kg, etc. Thus, the combustion efficiency can be calculated by the measured output power and the calorific power of consumed fuel. In this case, water is not calculated as fuel. Water molecules passing through a triboelectric reactor are at first dissociated into hydronium H₃O⁺ and hydroxyl OH- ions. Due to the electrical charging/ discharging processes and the resonant QED cavity effect of micro-bubbles and their collapse, respectively, taking place in an electric charging/discharging apparatus, as explained above, further decomposition of water molecules into plasma-like states may take place. According to the inventors, even free radicals, such as OH, H, HO₂ and their ionic counterparts, such as OH⁻, OH⁺, O⁻, H⁺, etc. may be produced. In some embodiments even hydrogen gas may be obtained with an electric charging/discharging apparatus by using a special membrane at an exit of an electric charging/discharging apparatus for separation of hydrogen and other substances. Such a membrane is, for example, porous and only permeable to hydrogen and contains oxygen compounds. Distilled water which should be treated with an electric charging/discharging apparatus is in some embodiments not pH neutral. Distilled water tends to be slightly acidic due to CO₂ absorption, or slightly basic, when containing corresponding components. It has been found, that water steam passing through a triboelectric reactor is charged positive, if the water is acidic, and charged negative, if the water is basic. The triboelectric effect does not occur for pH neutral water. Also, slightly basic water vapour mixed with humid air, which has absorbed CO₂ in its water droplets and therefore produces carbonic acid, gets pH neutral due to the carbonic acid and therefore the triboelectric effect does not occur. Thus, in some embodiments the water, being treated in a triboelectric reactor or in another electric charging/discharging apparatus, is preferably acidic or basic and its pH value can be up to pH 0 or pH 14, respectively, but not neutral (pH 7).

Turning now to the detailed description of the embodiments of Figs. 4-13:

Fig. 4 shows a first embodiment of a volatilisation chamber 14 used for the apparatus for pretreating of fuel supplied to a combustion process. The volatilisation chamber 14, is for example made out of metal, has a cubic-like shape and is filled with liquid fuel 25. On the top of the volatilisation chamber 14 a duct configuration 17 is located which can transport volatilised fuel 19. The liquid fuel 25 is heated by a heating apparatus 21, which has a snake-like shape and conducts heated water. The water of heating apparatus 21 is heated to a well-defined temperature, such that the temperature of the liquid fuel 25 is accurately controllable. The temperature of the liquid fuel must be not too high, otherwise the fuel would evaporate and therefore components of the fuel having different weight and/or different evaporation behaviour would be separated. Thus, the fuel temperature should be, for example, below the boiling temperature of the fuel. The volatilisation of the liquid fuel 14 is achieved by conducting compressed air through an air apparatus 15 through the heated liquid fuel 14. The air apparatus 15 includes pipes having multiple, e.g. 1000, air outlet holes 23 with a diameter of, e.g. 1 mm. The pipes of the air apparatus 15 run through the liquid fuel 25 in a lower area of the volatilisation chamber 14. It has to be noted that there exist various embodiments having different air apparatuses, including different number of pipes running through the liquid fuel 25 and also the diameter of the pipes and the number of pipes differ. The crucial point is to conduct enough air (bubbles) through the heated liquid fuel 25 to volatilise it. The air coming out of the air outlet holes of the air apparatus 15 ascends as little bubbles through the liquid fuel 25, and these bubbles mix with fuel molecules. The bubbles including a mixture out of air and fuel molecules ascend out of the liquid fuel 25, and distribute as volatilised fuel in the space above the liquid fuel 25 in the volatilisation chamber 14. From there, the volatilised fuel 19 gets into the duct configuration 17, which leads the volatilised fuel 19 into an electric charging/discharging apparatus or a fuel mixing chamber. The pressure for conducting the volatilised fuel 19 is produced by the above-mentioned compressed air and/or by, e.g., the suction pressure of a combustion engine, which uses pretreated volatilised fuel. In some embodiments however, depending on the size of the combustion engine using the pretreated fuel, an additional compressor is located before or after the volatilisation chamber - or in any other position before the combustion engine - to increase the pressure for the conducted volatilised fuel. The size of the volatilisation chamber 14 depends on the amount of required volatilised fuel. Thus, the bigger the surface of the liquid fuel is, the more volatilised fuel 19 will be produced.

Fig. 4b shows an alternative embodiment of a volatilisation chamber 27. In this embodiment the liquid fuel 41 being in a ground area of the volatilisation chamber 27, is volatilised by blowing air with a ventilation apparatus 37 through a fabric fuel diffusor 31 being soaked with liquid fuel 41. The fabric fuel diffusor 31 is made out of a material which is capable to soak fuel, e.g. cotton or synthetic fiber. For a better distribution of the fuel in the fabric fuel diffusor 31, a fuel pump 29 pumps fuel through a pipe configuration above over the fabric fuel diffusor 31. The fabric fuel diffusor 31 separates in this embodiment the volatilisation chamber 27 into to halves, a left and a right half, as depicted in Fig. 4b. The right half of volatilisation chamber 27 is filled with volatilised fuel 35, which has been produced by the ventilation apparatus 37 and the fabric fuel diffusor 31. Air is blasted by the ventilation apparatus 37 through the fabric fuel diffusor 31, which consist of a fabric sheet soaked with fuel. By blasting the air through this fabric sheet fuel molecules are carried away and mix with the air, which leads to volatilised fuel 35 distributed in the right half of the volatilisation chamber 27. This volatilised fuel 35 is conducted through duct configuration 33 to a fuel mixing chamber or to an electric charging/discharging apparatus.

In Fig. 4c a further embodiment, as alternative to the embodiment of Fig. 4b, of a volatilisation chamber is shown. The volatilisation chamber 28 differs from volatilisation chamber 27, as explained above, only in the way how volatilisation is done. Here, air for volatilisation of fuel in the fabric fuel diffusor 31 is conducted via a compressed air configuration 30 into a left half of the volatilisation chamber 28.

The compressed air coming from the compressed air configuration 30 is pressed through the fabric fuel diffusor 31 and therefore, as explained above, volatilises fuel soaked in the fabric fuel diffusor 31. In a right half of volatilisation chamber 28 volatilised fuel 35 is collected and conducted over a duct configuration 33 to a charging/discharging apparatus or a mixing chamber.

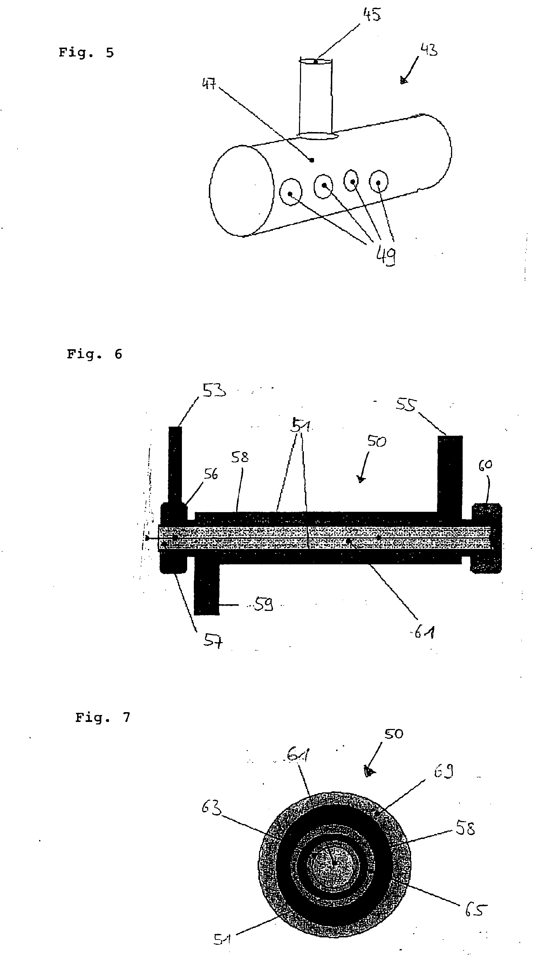

In Fig. 5 a fuel mixing chamber 43 for mixing different types of volatilised fuels including water is illustrated; such a mixing chamber 43 is adapted to be used in the apparatus for pretreating of fuel supplied to a combustion process. The mixing chamber 43 is a small chamber having a larger cross-section than a pipe made by corrosion-resistant metal as other duct/pipeline of this system. Through entrances 49 the different fuel types are conducted into a fuel mixing chamber part 47. In the embodiment shown in Fig. 5 the mixing chamber 43 includes 4 entrances for four different fuel types and these entrances are located on one side of the fuel mixing chamber part 47. Of course, there also exist embodiments with mixing chambers 43 having more or less than these four entrances, such that for every number of different fuel types corresponding entrances are provided. In the mixing chamber part 47 the different volatilised fuels are mixed, e.g. by turbulent flows occurring by conducting the different volatilised fuels through entrances 49 into the cylindrically shaped fuel mixing chamber part 47. On the top of the fuel mixing chamber part 47 an exit pipe 45 provides an exit for the different fuels mixed in the fuel mixing chamber part 47. Exit pipe 45 conducts the mixed fuels to a following triboelectric reactor or another electric charging/discharging apparatus. In some embodiments the fuel mixing chamber 43 is positioned after several triboelectric reactors and/or other several electric charging/discharging apparatuses for different fuels. Therefore, in this case the mixing of different fuels happens after a treatment of the volatilised fuel in a corresponding triboelectric reactor or other electric charging/discharging apparatus. In some embodiments an additional system to enhance the mixing of different fuel types is not necessary, because the suction pressure produced by a combustion engine and/or compressor is sufficient to produce turbulent flows causing a mixing of different fuel types. The portion of water can be in some embodiments up to about 80%, without disturbing the triboelectric effect and/or the combustion process. By optimising the overall processes it is conceivable that the water portion can be slightly increased in some embodiments.

Fig. 6 shows an embodiment of a triboelectric reactor 50 adapted to be used in the apparatus for pretreating of fuel supplied to a combustion process, i.e. for decomposition of volatilised fuel provided by the the volatilisation chamber and the mixing chamber (not shown), as discussed above, in a longitudinal section view. The volatilised fuel is conducted through an entrance 57 into a heating chamber 61 for heating the volatilised fuel. The heating chamber 61 is a longitudinal pipe having a diameter of several millimetres to few centimetres, e.g. 1 cm, and is made out of metal or any other heat resistant material, such as ceramics. Volatilised fuel streaming through the heating chamber 61 is heated by heat produced in a surrounding triboelectric reaction chamber 51. The heated volatilised fuel coming out of the heating chamber 61 is conducted via a little chamber 60 into the triboelectric reactor 51 surrounding the pipe of the heating chamber 61. The triboelectric reaction chamber 51 has a cylindrical shape and its diameter is only a few millimetres, e.g. 2 millimetres, bigger than the diameter of the inner heating chamber 61, so that the resulting spacing is about 2 millimetres. This resulting spacing builds a reactor channel through which the heated volatilised fuel is conducted. In this reaction chamber 51 the triboelectric effect occurs, due to friction between molecules in the gaseous volatilised fuel and a surface of the triboelectric reaction chamber 51. Preferably, the triboelectric reaction chamber 51 is made out of ceramics, since the triboelectric effect occurs stronger between non-conductive material, such as insulators. Due to the friction between the volatilised fuel and the surface of the triboelectric reaction chamber and the resulting triboelectric effect, the volatilised fuel is electrically charged. The voltage of the electric charge may reach in some embodiments several megavolts. Thus, charging and discharging processes in the triboelectric reaction chamber 51 may take place and even, as discussed above, microplasma and resonant QED cavity effect, respectively, may occur. These reactions produce heat, used for heating up the heating chamber 61, also. The temperatures in the triboelectric reaction chamber 51 may reach several hundred and up to a few thousand degrees Celsius. Additionally, due to the small spacing left in the triboelectric reaction chamber 51, where the volatilised fuel is conducted through, high pressures may occur. All these processes may, according to the inventor, decompose inter- and intramolecular bonding of the molecules located in the triboelectric reaction chamber 51. In some embodiments even dissociation of water, mixed into the volatilised fuel, occurs and even decomposition down to atomic level of volatilised fuel in the triboelectric reaction chamber 51 is occurring. The decomposed volatilised fuel is conducted at the end of the triboelectric chamber 51 through the exit 53 of a small cylindrical chamber 56 to a combustion chamber of a combustion apparatus or to a mixing chamber. In a starting phase of the triboelectric reactor 50, the temperature of the heating chamber 61 and/or the triboelectric reaction chamber 51 may too low to achieve the above discussed decomposition processes occurring in the triboelectric reaction chamber 51. Therefore, in some embodiments additional heat is provided, e.g. by a exhaust chamber 58 surrounding the triboelectric reaction chamber 51. Exhaust chamber 58 has an entrance 59 and an exit 55 for exhaust coming from a combustion chamber of a combustion apparatus. The exhaust chamber 58 has a longitudinal and cylindrical shape and its diameter may be in the order of centimetres, e.g. 2 cm, bigger than the diameter of the triboelectric reaction chamber 51. The flow direction of the exhaust in the exhaust chamber 58 is contrary to the flow direction of the volatilised fuel in the triboelectric chamber 51. Therefore, the heat gradient is such that the temperature at the end (left side in Fig. 6) of the triboelectric reaction chamber 51 is higher than at the beginning of the triboelectric chamber 51 (right side in Fig. 6). Accordingly, the temperature of the exhaust chamber 58 is at the beginning and the entrance 59 higher (left side in Fig. 6) than at the end of exhaust chamber 58 and the exit 55. The exhaust chamber 59 may be made out of any heat and corrosion resistant material, such as metal and/or ceramics.

In a sectional view of the triboelectric reactor 50, illustrated in Fig. 7, the round heating chamber pipe 61 for the volatilised fuel is visible in the centre of the triboelectric reactor 50. Between the heating chamber 61 and the triboelectric chamber 51 a separation layer 63 is positioned. This separation layer 63 is made out of metal and/or ceramics, is a few millimetres thick and has heat conducting properties. The triboelectric reaction chamber 51 is surrounded by another separation layer 65, which also can be made out of metal and/or ceramics, is a few millimetres thick and is disposed there for heat conducting purpose. The separation layer 65 is surrounded by the exhaust chamber 58. A reactor housing 69 is surrounding the inner exhaust chamber 58 and has a cylindrical shape. The reactor housing 69 is made out of metal and/or ceramics and has a thickness of several millimetres. This material should preferably have electrically and heat insulating characteristics. In some embodiments for heat insulating purposes, an additional cover for several parts, such as the volatilisation chamber and the triboelectric reactor is provided. This cover is preferably made out of a heat insulating material, in order to avoid, or at least decrease, heat loss.

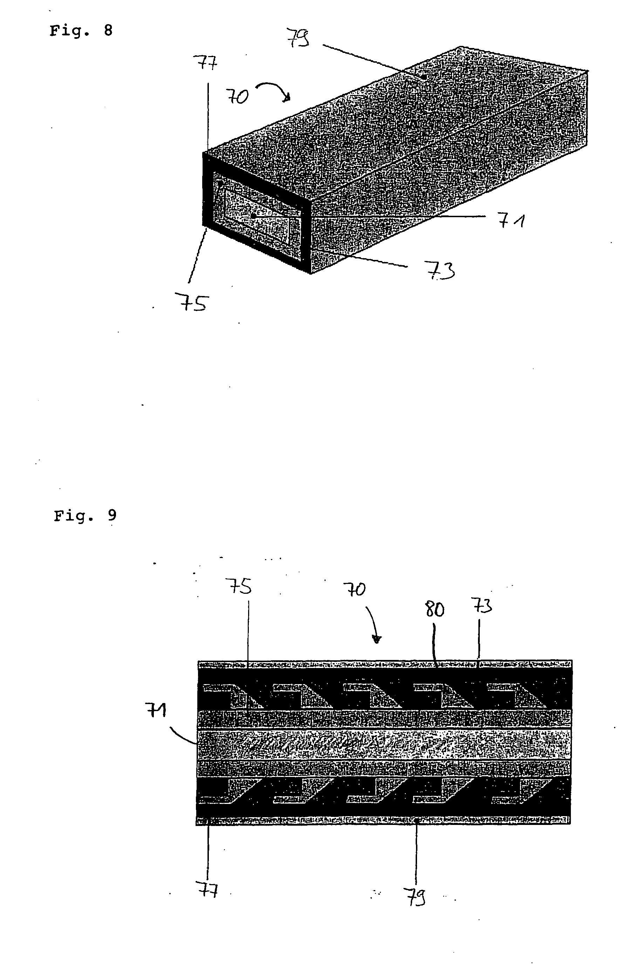

In Fig. 8 another embodiment of a triboelectric reactor 70 having a rectangular shape is shown. In an inner area of the triboelectric reactor 70 a heating chamber 71 for heating volatilised fuel coming into the triboelectric reactor 70 is located. The heating chamber 71 is surrounded by a separation layer 75 separating the heating 71 and a triboelectric reaction chamber 73 having a rectangular shape. Another separation layer between the triboelectric reaction chamber 73 and the surrounding exhaust chamber 77 is not shown in this embodiment. Thus, the only difference to the triboelectric reactor 50, as depicted in Figs. 6 and 7, is the rectangular shape.

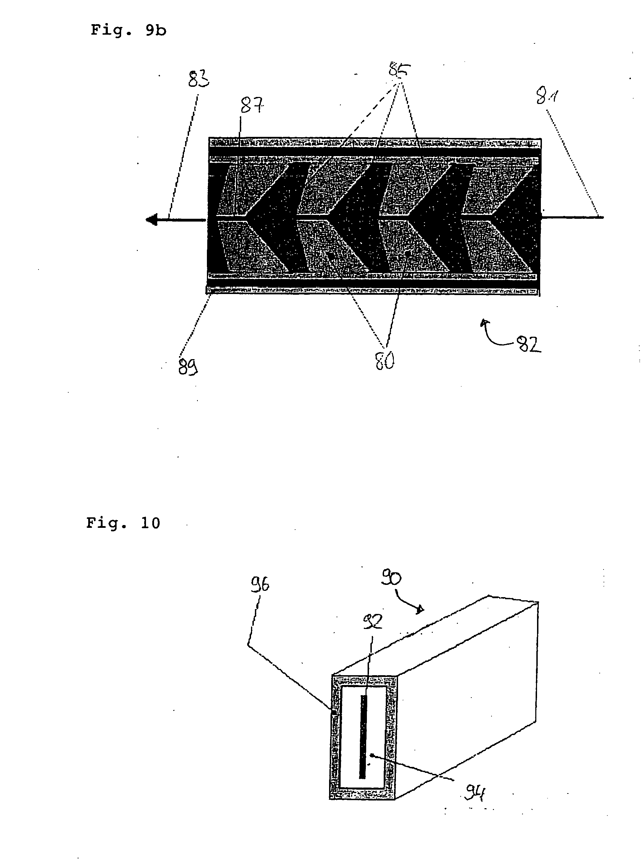

In Fig. 9, according to an embodiment, a structure 80 in the triboelectric reaction chamber 73 of the triboelectric reactor 70 is illustrated in a cross-sectional view in polar direction. Such a structure 80 is able to enhance turbulences of volatilised fuel flowing through the triboelectric reaction chamber 73. Volatilised fuel flows from the right to the left side through the triboelectric reaction chamber 73 as shown in Fig. 9. The structure 80 has in this case a shape such as a halved arrow and has typically a height of several millimetres. Thus, the surface for friction between the volatilised fuel and the triboelectric reaction chamber 73 is increased and therefore the triboelectric effect is enhanced. Of course, such structures as structure 80 may be positioned in any triboelectric reaction chamber, for example also in the triboelectric reaction chamber 50 mentioned above in Fig. 6. The structure 80 may have various different shapes, which all have in common to increase the surface for friction and/or enhance turbulence of the volatilised fuel. In some embodiments the structure 80 is directly produced on the surface of the triboelectric reaction chamber, and is in some embodiments made out of the same material, e.g. metal or ceramics, as the triboelectric reaction chamber. The triboelectric reaction chamber 73 is surrounded by the exhaust chamber 77 supplying heat from exhaust from a combustion chamber to the triboelectric reaction chamber 73. At least a housing 79 is building the completion of the triboelectric reactor 70.

In Fig. 9b another embodiment of a triboelectric reactor 82 with structures 80 is shown. In this embodiment the structures 80 divide the inner area of the triboelectric reactor 82 in several triboelectric reaction chambers 85 through which incoming volatilised fuel 81 is conducted. Incoming volatilised fuel 81 is conducted through a small spacing 87 connecting two triboelectric reaction chambers 85. Additionally, the shape of the structures 80 and the triboelectric reaction chambers 85, respectively, is such that the volatilised fuel 81 is guided in the direction to spacing 87 with increased pressure. In this embodiment no additional heating chamber is foreseen.

In Fig. 10 still another embodiment of a triboelectric reactor 90 is shown. In this embodiment volatilised fuel is conducted through a triboelectric reaction chamber 92 having a shape such as a slit or a channel. A rectangular triboelectric reaction chamber housing 94 surrounds the triboelectric reaction chamber 92 and has a width which is larger than the width of the triboelectric reaction chamber 92. In the housing 94 structures as shown in Figs. 9b and 9 may be located. The housing 94 and, due to heat conduction, also the triboelectric reaction chamber 92 is heated with an exhaust chamber 96 surrounding the housing 96. This sandwich like construction of the triboelectric reactor 90 is a compact embodiment of the triboelectric reactor.

A combination of several triboelectric reactor modules 101 building a multiple triboelectric reactor 100 is shown in Fig. 10b. In this embodiment the rectangular construction of the triboelectric reactor modules 101, having triboelectric reaction chambers 102, is used for building a triboelectric reactor 100 including multiple triboelectric reactor modules 101. A common exhaust chamber 106 heats all triboelectric reaction modules 101 by conducting exhaust between, above and under the multiple triboelectric reactor modules 101. The triboelectric reaction modules 101 may have different housings 103 for providing different inner structures. The multiple triboelectric reactor 100 may be used in different ways in the embodiments. In one embodiment, the multiple triboelectric reactor modules 101 are used parallel, i.e. volatilised fuel is conducted parallel through the triboelectric reactor chambers (or channels) 102. In another embodiment, the triboelectric reactor modules 101 build a series, i.e. volatilised fuel is conducted, e.g. from the left triboelectric reactor module 101 through the next right module 101, and so on. In this case even different structures in the housing 103 of the triboelectric reactor modules 101 may provide different steps of decomposition of the volatilised fuel. Additionally, the width of the triboelectric reaction channels 102 and or of the housings 103 may vary, e.g. may get smaller from left to right as indicated in Fig. 10b. This might be useful to keep up a sufficient friction between volatilised fuel and the surface of the triboelectric reaction chambers 102. Assuming, an embodiment in which the triboelectric reactor modules 101 are connected in series, fuel droplets and/or molecules would not be totally decomposed in the most left triboelectric reactor module 101 in a first step. Thus, incomplete decomposed volatilised fuel would get from the most left reactor module 101 in a next right adjacent triboelectric reactor module 101. The dimensions of this next reactor module may be adapted to the parameters of the, in a first step decomposed, volatilised fuel. For instance, temperature, pressure, and friction in the triboelectric reactor modules 101 may be dependent of the level of decomposition of volatilised fuel. Therefore, in some embodiments the dimensions and the inner structures are adapted to these parameters. For instance, the width of the triboelectric reaction channels 102 may get smaller from the most left triboelectric reactor module 101 to the most right triboelectric reactor module 101. Additionally, the width of the housing 103 may get smaller in a similar way and structures in the housings 103 may vary, such that friction also for decomposed volatilised fuel would be sufficient to charge the volatilised fuel. In still another embodiment the multiple tribolectric reactor modules 101 are connected parallel to different parallel volatilisation chambers for different fuels.

In Fig. 11 an embodiment of an electric charging/discharging apparatus adapted to be used in the apparatus for pretreating of fuel supplied to a combustion process, i.e. an electrostatic reactor 110 for decomposition of incoming volatilised fuel 112 is shown. The electrostatic reactor 110 has a cylindrical tube electrode 118 and, running on the symmetric middle axis of the tube electrode 118, a wire electrode 116. Volatilised fuel 112 is conducted under atmospheric pressure from the left side in Fig. 11 into the tube electrode 118, and is conducted as decomposed volatilised fuel 114 out of the tube electrode 118 on the right side. Between the two electrodes, the tube electrode 118 and the wire electrode 116, a high voltage of several 100 Volts up to few 10.000 Volts DC or high/low frequency AC is applied. The resulting electric field between the electrodes 118 and 116 leads for example to a corona discharge. This discharge generates ionised molecules and electrons which collect kinetic energy due to the applied electric field. The accelerated electrons itself may ionise other molecules and atoms of the air and fuel molecules. Ions and electrons collect kinetic energy due to the applied electric field and collide with fuel/air molecules and fuel droplets. Such collisions and other processes, such as plasma generation and corona discharging, may lead to a decomposition of fuel molecules and fuel droplets. For enhancing the decomposition of fuel molecules the electric charging/discharging apparatus 118 is surrounded by an exhaust chamber 113, through which exhaust from a combustion chamber is conducted. The heat of the exhaust heats the tube electrode 118 and therefore the volatilised fuel 112 conducted through the tube electrode 118. The tube electrode 118 and the wire electrode 116 may be made out of metal. The length of the tube can be several cm to several 10 centimetres. Its diameter can be few centimeters up to over 10 cm.

In Fig. 11 b still another embodiment of a cylindrical shaped electric charging/discharging apparatus 120 is shown. Here, ring electrodes 125, located on a cylindrical surface, are separated by an insulation 130. Corresponding to the outer ring electrodes 125, inner electrodes 127 are located on a rod 122 in a position next to the corresponding outer ring electrodes 125. Thus, the distance of the inner electrodes 127 and the outer electrodes 125 is as short as possible, e.g. it corresponds to the radius of the outer ring electrodes 125. The inner electrodes are separated by an insulation 130, too. The insulation 130 may be made out of plastic or another material having a high electric resistance. The inner and outer electrodes 127 and 124, respectively, may be made out of corresponding metal stripes. A high DC or AC voltage of several 100 Volts up to few 10.000 Volts is applied on the electrons 125 and 127, as explained above. Again a surrounding exhaust chamber 129 is provided, for heating the apparatus 120. Volatilised fuel 121 is conducted on the left side into the electric charging/discharging apparatus in Fig. 11 b, and is conducted as decomposed volatilised fuel 123 on the right side. Inside the apparatus reactions, as explained above, may take place and decompose the fuel molecules incoming volatilised fuel 121. The length of the apparatus 120 can be several cm to several 10 centimetres. Its diameter can be few centimeters up to over 10 cm. The advantage of this embodiment is the possibility to design the dissociation and recombination process within the tube by varying the distance between the electrode pairs.

A combination of a triboelectric reactor and an electric charging/discharging apparatus 140 is illustrated in Fig. 12. In this embodiment through a tube 153 volatilised fuel 142 is conducted from the left side to the right side and leaves the tube 152 through a triboelectric reaction channel 151 on the right side as decomposed fuel 143. In the interior of tube 153 a cone 155 compresses the incoming volatilised fuel 142 on its way from the left to the right side and conducts it in the triboelectric reaction channel 151. For ionisation of the volatilised fuel 142 a left electrode 145 and a right electrode 143 are provided and supplied with a high voltage of up to several 100 kV. For an additional acceleration of the ionised fuel a coil 149 surrounds the tube 153. Additionally, for heating of the volatilised and ionised fuel 142 an exhaust chamber 157 surrounds the tube 153 and the cone 153 with the triboelectric reaction channel 151. The length of the tube 153 can be several cm to several 10 centimetres. Its diameter can be few centimeters up to over 10 cm at the entrance and few millimeters at the exit.

In Fig. 13 an embodiment of a combustion apparatus 160 with an integrated electric charging/discharging apparatus, i.e. a triboelectric reactor 162, is shown. The combustion apparatus 160 includes a combustion chamber 164 in which decomposed fuel is burned. Fuel for the combustion apparatus 160 is volatilised in volatilisation chambers 172. In Fig. 13 three volatilisation chambers for different fuels are depicted, while in other embodiments more or less than three chambers may be present. In the volatilisation chambers 172 compressed air is conducted via a pipe 168. Fuel being volatilised in the volailization chambers 172 is conducted via pipes 174 in a mixing chamber 166. As explained above, in the mixing chamber 166 the different fuels - in this case three - are mixed. From the mixing chamber 166, mixed volatilised fuel is conducted in the triboelectric reactor 162 for decomposition of the mixed volatilised fuel. After decomposition of the mixed volatilised fuel, as explained above, the decomposed fuel reaches the combustion chamber 164 and burns, depicted in Fig. 13 as a flame 170. The heat in the combustion chamber 164, generated by the combustion of the decomposed fuel coming from the triboelectric reactor 162, is used for heating the triboelectric reactor 162 and therefore the heat enhances the triboelectric effect.

In Fig. 14 another combustion apparatus 180 is illustrated. The combustion apparatus 180 includes two volatilisation chambers 186 for two different fuels, such as, e.g. Diesel fuel and water. In these volatilisation chambers 186 the fuels are volatilised, as explained above. The volatilised fuel is conducted via a duct system 189 from the volatilisation chambers 186 into a mixing chamber 188. This conduction of volatilised fuel is enhanced in this embodiment by compressed air coming into the volatilisation chambers 187 over ducts 187, and by a compressor 184 located between a combustion engine 182 and a triboelectric reactor 191. In the mixing chamber 188 the volatilised fuels, e.g. Diesel fuel and water, are mixed, e.g. due to turbulences, as explained above, and then conducted from the mixing chamber 188 into a triboelectric reactor 191: The triboelectric reactor 191 is heated by exhaust gas coming into the triboelectric reactor 191 at 190 and is conducted out of the triboelectric reactor 191 at 192. After decomposition of the mixed volatilised fuel, the fuel is conducted via a an exit 194 into the compressor 184 and then into the combustion engine 182.

It is to be understood that the invention is not limited in its application to the details of construction and the arrangement of the components set forth in the above description of embodiments or illustrated in the drawings. The invention is capable of including other embodiments or being carried out for similar combustion processes and fuels having the same function. Also, it is to be understood that the phraseology and terminology employed herein are for the purpose of description and should not be regarded as limiting.

All publications and existing systems mentioned in this specification are herein incorporated by reference.

Experiments made by the inventors have shown that a combustion apparatus using an electric charging apparatus and/or charging/discharging apparatus for pretreating of fuel, according to embodiments of the invention, can increase the efficiency of a combustion process. Table 1 shows some results for different experiments:

**Table 1**

| | Duration (min.) | Output Power (kW) | Efficiency (%) |
|---|---|---|---|
| Test 1 | 30 | 7,76 | 32,5 |
| Test 2 | 30 | 8,34 | 35,3 |
| Test 3 | 30 | 8,08 | 50,1 |
| Test 4 | 30 | 7,54 | 64,3 |

In an experimental setup several triboelectric reactors for pretreating Diesel fuel and water with alcohol are installed in parallel. A defined load, such as an electric generator, is attached to a Diesel engine and fuel consumption and output power are measured in a defined time period, for example, 30 minutes. Every fuel has its own calorific power, e.g. Diesel oil has 43000 kJ/kg, butane 45600 kJ/kg, etc. Thus, the combustion efficiency can be calculated with the measured output power and the known calorific power of consumed fuel. In this case, water is not calculated as fuel.

**Test 1:** In this experiment traditional fuel, namely gasoil, was used without using an electric charging/discharging apparatus for decomposition of the fuel. This experiment presents a reference in respect to the efficiency which can be reached without using the present invention.

**Test 2:** In this experiment water and alcohol are mixed to the fuel (gasoil) and a charging/discharging apparatus decomposes the mixed fuel. This leads to an increase of efficiency from 32,5 % to 35,3 %. Additionally an auxiliary air compressor provides air to the charging/discharging apparatus.

**Test 3:** This experiment differs from test 2 only in a better regulation of the prameters such as temperature, fuel/water ratio, etc., of the charging/discharging apparatus. This test represents the best result in this experiment.

**Test 4:** In this experiment the mixed fuel had a composition of 4 portions fuel and 1 portion water with alcohol. The mixed fuel was conducted through a charging/discharging apparatus.

Although certain devices and products constructed in accordance with the teachings of the invention have been described herein, the scope of coverage of this patent is not limited thereto. On the contrary, this patent covers all embodiments of the teachings of the invention fairly falling within the scope of the appended claims either literally or under the doctrine of equivalents.

Accordingly, the protection sought is set forth in the claims below:

## Claims

1. An apparatus for pretreating of fuel supplied to a combustion process, comprising: an inlet for providing volatilised or gaseous fuel to the apparatus; and an electric charging apparatus (50; 70; 82; 90; 100; 110; 120; 140) comprising a heating chamber (61, 58; 71, 77; 96; 106; 113; 129; 149) for heating the volatilised or gaseous fuel and an electric reaction chamber (51; 73; 85; 94; 102; 118; 153) for electrically charging and/or discharging the volatilised or gaseous fuel.

2. The apparatus of claim 1, further comprising at least one heated fuel volatilisation chamber (27; 28) containing fuel, said volatilisation chamber (27; 28) comprising a fabric fuel diffuser (31) for dividing the volatilisation chamber (27; 28) in a first and a second part, a fuel pump (29) for applying fuel to the fabric fuel diffusor (31) and an air apparatus (30; 37) blasting air from the first part through the fabric fuel diffusor (31) into the second part of the volatilisation chamber (27; 28).

3. The apparatus of claim 2, further comprising multiple volatilisation chambers (14; 27; 28) for different types of fuels and for water, and a mixing chamber (43) for volatilised fuels and water, which is positioned between the multiple volatilisation chambers (14; 27; 28) and the electric charging apparatus.

4. The apparatus according to claim 3, comprising for each volatilisation chamber (14; 27; 28) a corresponding electric charging apparatus (50; 70; 82; 90; 100; 110; 120; 140), and wherein each of the multiple volatilisation chambers (14; 27; 28) is connected to a corresponding electric charging apparatus (50; 70; 82; 90; 100; 110; 120; 140), and wherein the mixing chamber (43) is positioned between the electric charging apparatuses (50; 70; 82; 90; 100; 110; 120; 140) and a combustion chamber (164).

5. The apparatus of any one of the preceding claims, wherein the heating chamber (61, 58; 71, 77; 96; 106; 113; 129; 149) for volatilised fuel of the electric charging apparatus (50; 70; 82; 90; 100; 110; 120; 140) has a longitudinal shape and is positioned in the centre of the electric charging apparatus (50; 70; 82; 90; 100; 110; 120; 140).

6. The apparatus of any one of the preceding claims, wherein at least one wall of the electric charging reaction chamber (73; 85) comprises structures (80) for enhancing the turbulence of gas flow for enhancing a triboelectric effect.

7. The apparatus of any one of the preceding claims, wherein the electric charging apparatus (50; 70; 82; 90; 100; 110; 120; 140) comprises an auxiliary heating apparatus (58; 77; 96; 106; 113; 129; 149) using exhaust gas from a combustion chamber for heating up volatilised fuel at an initial stage of a combustion process, before the electric reaction chamber (51; 73; 85; 94; 102; 118; 153) begins to supply sufficient heat.

8. The apparatus of any one of the preceding claims, wherein the electric reaction chamber is a triboelectric reactor adapted to electrically charge the fuel by a triboelectric process.

9. The apparatus of claim 8, wherein the triboelectric reactor is essentially made of ceramics and/or metal.

10. The apparatus of at least one of claims 8 or 9, wherein the triboelectric reactor comprises at least one fuel conductor having such a small width or diameter that the volatilised or gaseous fuel is charged during its flowing through due to a triboelectric effect.

11. The apparatus of any one of the preceding claims, wherein basic or acidic water is added to the fuel provided to the apparatus.

12. The apparatus of claim 11, wherein the water has a pH value between 14,0 and 0,0.

13. The apparatus of any one of the preceding claims, wherein the electric reaction chamber (51; 73; 85; 94; 102; 118; 153) for electrically charging the volatilised or gaseous fuel is adapted to provide an electric charge at least about 1000 As.

14. The apparatus of any one of the claims 1-7, wherein the electric reaction chamber is adapted for charging and discharging the fuel by a corona discharge process.

15. The apparatus of claim 14, referred to claim 8, comprising a combination of a triboelectric reactor and a corona discharge reactor.

16. The apparatus of any one of the preceding claims, wherein a membrane separates H2 and 02 which is formed by into its atomic elements decomposed water, in order to obtain H2 gas.

17. A method of pretreating of fuel supplied to a combustion process, comprising the steps of:
providing volatilised or gaseous fuel;
heating the volatilised or gaseous fuel; and
electrically charging and/or discharging the heated volatilised or gaseous fuel.

18. The method of claim 17, wherein the electrically charging of the fuel is performed by a triboelectric process.

19. The method of claim 17 or 18, wherein the step of electrically charging the volatilised or gaseous fuel is adapted to provide an electric charge at least about 1000 As.

20. The method of any one of the claims 17 to 19, wherein the electrically charged fuel is accelerated in an electric field.

21. The method of any one of the claims 17 to 20, wherein different types of fuels are mixed before they are electrically charged.

22. The method of any one of the preceding claims 17 to 21, wherein basic or acidic water is added to the fuel or fuels provided to the method.

23. The method of claim 22, wherein the water has a pH value between 14,0 and 0,0.

24. The method of claim 17, wherein the electric charging/discharging of the fuel is achieved by a corona discharge process.

25. The method of claims 18 and 24, wherein the electrically charging and/or discharging is achieved by a combination of a triboelectric process and a corona discharge process.

26. The method of any one of the claims 16 to 25, wherein the step of heating the volatilised or gaseous fuel is effected by a resonant cavity quantum electric effect.
